# EUROPEAN PATENT APPLICATION

(11) **EP 4 742 339 A1**
(43) Date of publication of application: **13.05.2026**
(21) Application number: 24888878.6
(22) Date of filing: 08.07.2024
(51) Int. Cl.: H01M 10/04, B65H 35/00

(54) **STACK CELL TAPING APPARATUS AND STACK CELL TAPING METHOD USING SAME**

(30) Priority: 06.11.2023 KR 20230152115
(71) Applicant: LG Energy Solution, Ltd., Seoul 07335 (KR)
(72) Inventor: KOO, Dong Jae, Daejeon 34122 (KR); MOON, Jong Min, Daejeon 34122 (KR); KIM, Chang Hee, Daejeon 34122 (KR)
(74) Representative: Goddar, Heinz J.
(86) International application number: PCT/KR2024/009711
(87) International publication number: WO 2025/100681

(57) **Abstract**

Disclosed are a stack cell taping apparatus including a taping unit, the taping unit including a gripping portion configured to grip both ends of an adhesive member so as to tape a transferred stack cell on a side surface of the transferred stack cell, a roller portion configured to press the adhesive member against one surface and/or another surface of the transferred stack cell, a guide portion configured to guide a movement path of the roller portion according to information on the thickness of the transferred stack cell, and a driving member configured to move the gripping portion and the roller portion to one side or another side, and a stack cell taping method using the same.

## Description

### [Technical Field]

This application claims the benefit of priority to Korean Patent Application No. 2023-0152115 filed on November 6, 2023, the disclosure of which is incorporated herein by reference in its entirety.

The present invention relates to a stack cell taping apparatus and a stack cell taping method using the same, and more particularly to a stack cell taping apparatus for wrapping the perimeter of stacked battery cells to secure the battery cells and a stack cell taping method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, or a pouch-shaped battery having an electrode assembly mounted in a pouch-shaped case made of an aluminum laminate sheet.

An electrode process to manufacture a positive electrode and a negative electrode of a secondary battery includes a mixing process of mixing raw materials, a coating process of applying a mixed slurry to foil and to dry the same, a rolling process of flattening and pressing the slurry while allowing an electrode to pass between two rolls, a slitting process of cutting the width of the electrode based on the designed battery dimensions using a slitter, and a notching process of cutting away the remaining part of an uncoated portion excluding a part for grounding a tab.

The secondary battery is then subjected to a stacking process, which is a process of stacking a positive electrode, a negative electrode, and a separator of the battery after the notching process.

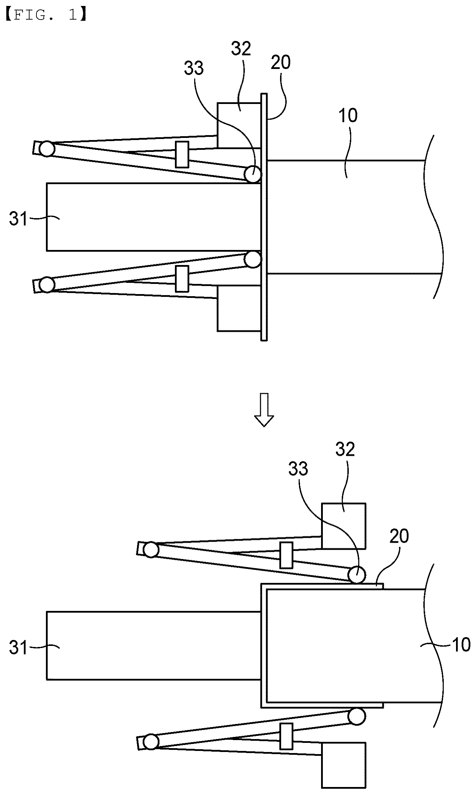

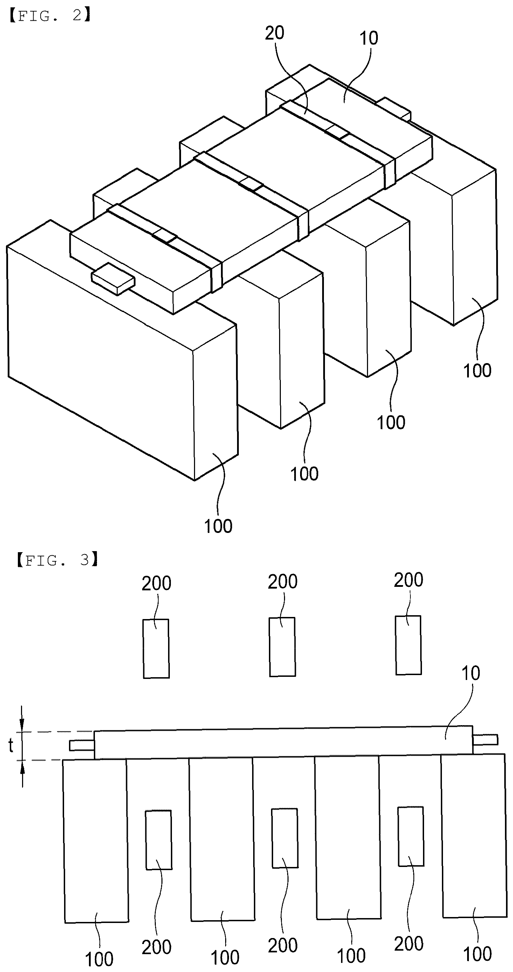

FIG. 1 is a view illustrating that a stack cell is taped using a conventional stack cell taping apparatus, and FIG. 2 is a view illustrating the state of the taped stack cell.

Referring to FIG. 1 and FIG. 2, a stack cell 10 constituted by cells stacked one on another through a stacking process is taped through an adhesive member 20 in order to secure the stack cells 10.

However, if the thickness of the stacked cell 10 is greater than the thickness of a guide 31, a roller portion 33 configured to press the adhesive member 20 moves while pressing corner parts of the stacked cell 10, whereby the separator may be folded or the stacked cells may be damaged (broken), resulting in defects of the stacked cell 10.

### (Prior Art Document)

(Patent Document 1) Korean Patent Application Publication No. 10-2023-0123304

### [Disclosure]

### [Technical Problem]

The present invention has been made in view of the above problems, and it is an object of the present invention to provide a stack cell taping apparatus capable of minimizing damage to stack cells during a taping process for securing the stack cells and a stack cell taping method using the same.

### [Technical Solution]

As a technical means for achieving the above object, a stack cell taping apparatus according to an embodiment of the present invention includes a taping unit (300) including a gripping portion (310) configured to grip both ends of an adhesive member (20) so as to tape a transferred stack cell (10) on a side surface of the transferred stack cell (10), a roller portion (320) configured to press the adhesive member (20) against one surface and/or another surface of the transferred stack cell (10), a guide portion (330) configured to guide a movement path of the roller portion (320) according to information on the thickness (t) of the transferred stack cell (10), and a driving member (340) configured to move the gripping portion (310) and the roller portion (320) to one side or another side.

Also, in the stack cell taping apparatus according to the embodiment of the present invention, the guide portion (330) may include a guide unit (331) located on the side surface of the transferred stack cell (10) and a position adjustment guide (332) located on one surface and/or another surface of the guide unit (331), the position adjustment guide being configured to adjust the position of the roller portion (320).

Also, the stack cell taping apparatus according to the embodiment of the present invention may further include a plurality of sensors (200) configured to measure the thickness (t) of the transferred stack cell (10) and to provide information on the thickness (t) of the transferred stack cell (10) to the guide portion (330).

Also, in the stack cell taping apparatus according to the embodiment of the present invention, the sensors (200) may be located on an upper side and a lower side of the transferred stack cell (10).

Also, in the stack cell taping apparatus according to the embodiment of the present invention, the position adjustment guide (332) may be configured to adjust the height of the guide portion (330) so as to correspond to the thickness (t) of the transferred stack cell (10) measured by the sensors (200).

Also, the stack cell taping apparatus according to the embodiment of the present invention may further include a plurality of supports disposed spaced apart from each other by a predetermined distance, the supports being configured to support the transferred stack cell (10).

Also, in the stack cell taping apparatus according to the embodiment of the present invention, the taping unit (300) may be disposed in plural so as to be located between respective supports (100).

Also, in the stack cell taping apparatus according to the embodiment of the present invention, the gripping portion (310) may include a first gripping unit (311) configured to grip one end of the adhesive member (20) and a second gripping unit (312) configured to grip another end of the adhesive member (20).

Also, in the stack cell taping apparatus according to the embodiment of the present invention, each of the first gripping unit (311) and the second gripping unit (312) may be a vacuum suction plate.

Also, in the stack cell taping apparatus according to the embodiment of the present invention, the roller portion (320) may include a first roller (321) configured to press one end of the adhesive member (20) so as to be in tight contact along an upper surface of one side of the transferred stack cell (10) and a second roller (322) configured to press another end of the adhesive member (20) so as to be in tight contact along a lower surface of the one side of the transferred stack cell (10).

Also, in the stack cell taping apparatus according to the embodiment of the present invention, the first roller (321) may be configured to be rolled from one surface of the guide portion (330) and may be configured to be moved along the upper surface of the one side of the transferred stack cell (10), and the second roller (322) may be configured to be rolled from another surface of the guide portion (330) and may be configured to be moved along the lower surface of the one side of the transferred stack cell (10).

Also, in the stack cell taping apparatus according to the embodiment of the present invention, the driving member (340) may include a cylinder (341), a support rod (342) provided on the other side of the cylinder (341), a first driving rod (343) connected to the support rod (342) on one side and to the first gripping unit (311) on another side, the first driving rod being configured to provide driving force to the first gripping unit (311) such that the first gripping unit can be moved to one side or another side, and a second driving rod (344) connected to the support rod (342) on one side and to the second gripping unit (312) on another side, the second driving rod being configured to provide driving force to the second gripping unit (312) such that the second gripping unit can be moved to one side or another side.

Also, in the stack cell taping apparatus according to the embodiment of the present invention, the driving member (340) may further include a first roller rod (345) connected to the first driving rod (343) on one side and to the first roller (321) on another side, the first roller rod being configured to provide driving force to the first roller (321) such that the first roller can be moved to one side or another side, and a second roller rod (346) connected to the second driving rod (344) on one side and to the second roller (322) on another side, the second roller rod being configured to provide driving force to the second roller (322) such that the second roller can be moved to one side or another side.

Also, in the stack cell taping apparatus according to the embodiment of the present invention, the taping unit (300) may be disposed in plural at opposite side surfaces of the transferred stack cell (10).

In addition, a stack cell taping method using the stack cell taping apparatus according to the embodiment of the present invention includes (S1) disposing a stack cell (10) on a plurality of supports (100), (S2) measuring the thickness (t) of the stack cell (10) through sensors (200), (S3) adjusting the height of the guide portion (330) through a position adjustment guide (332) so as to correspond to the measured thickness (t) of the stack cell (10), (S4) moving the gripping portion (310) and the roller portion (320) toward the stack cell (10) through the driving member (340), and (S5) attaching the adhesive member (20) gripped by the gripping portion (310) to a side surface of the stack cell (10).

### [Advantageous Effects]

As is apparent from the above description, in a stack cell taping apparatus according to the present invention and a stack cell taping method using the same, a guide portion having an adjustable thickness is provided, whereby it is possible to prevent damage to a stack cell due to the difference between the thickness of the guide portion and the thickness of the stack cell.

In addition, the stack cell taping apparatus according to the present invention and the stack cell taping method using the same have the advantage of providing a sensor configured to measure the thickness of the stack cell, whereby it is possible to accurately adjust the height of the guide portion even if the thickness of the stack cell changes.

### [Description of Drawings]

FIG. 1 is a view illustrating that a stack cell is taped using a conventional stack cell taping apparatus.
FIG. 2 is a view illustrating the state of the taped stack cell.
FIG. 3 is a side view illustrating a sensor of a stack cell taping apparatus according to an embodiment of the present invention.
FIG. 4 is a view of the stack cell taping apparatus according to the embodiment of the present invention, showing that a pair of rollers is located on a side surface of a stack cell.
FIG. 5 is a view of the stack cell taping apparatus according to the embodiment of the present invention, showing that the pair of rollers is located parallel to an upper surface and a lower surface of the stack cell.
FIG. 6 is a view of the stack cell taping apparatus according to the embodiment of the present invention, showing that the pair of rollers moves along the upper surface and the lower surface of the stack cell while pressing an adhesive member.
FIG. 7 is a view illustrating a connection member of the stack cell taping apparatus according to the embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a stack cell taping apparatus according to the present invention will be described.

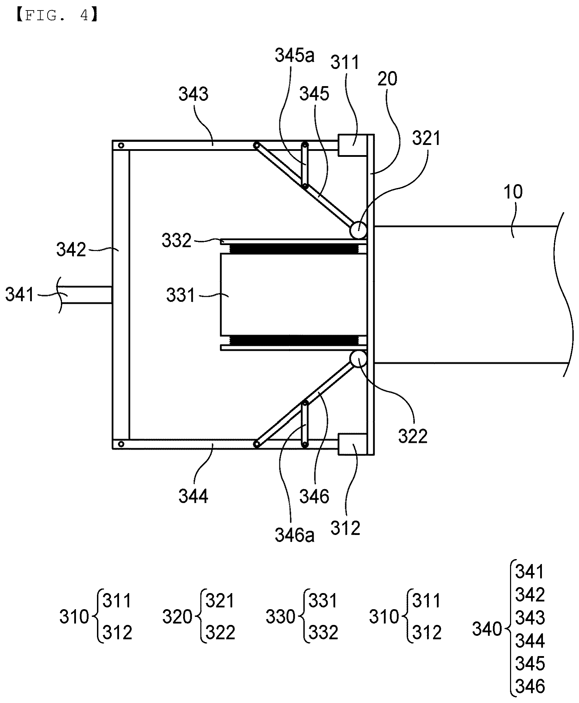

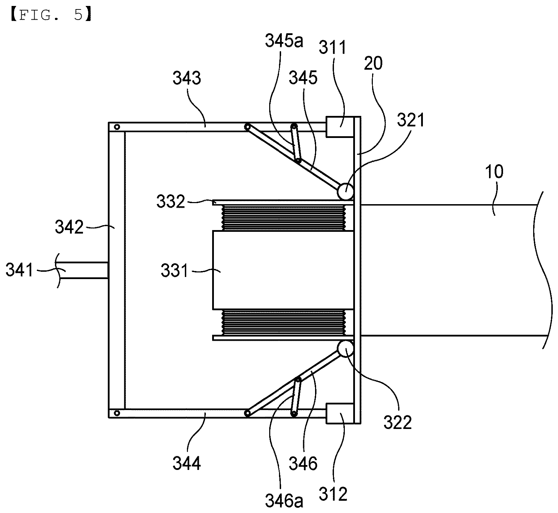

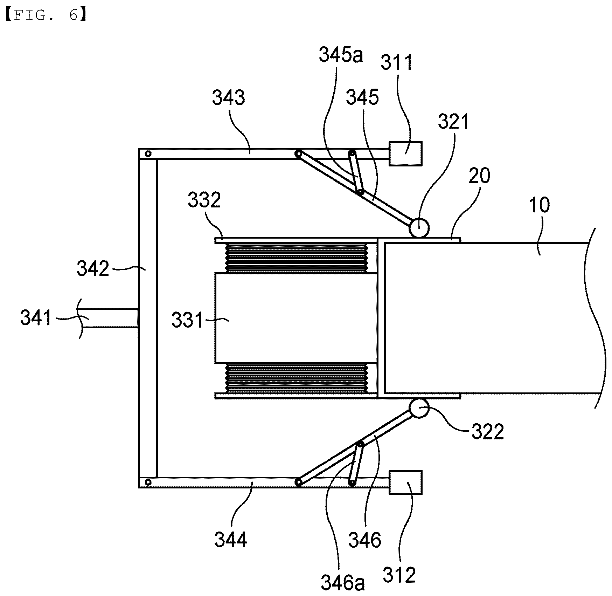

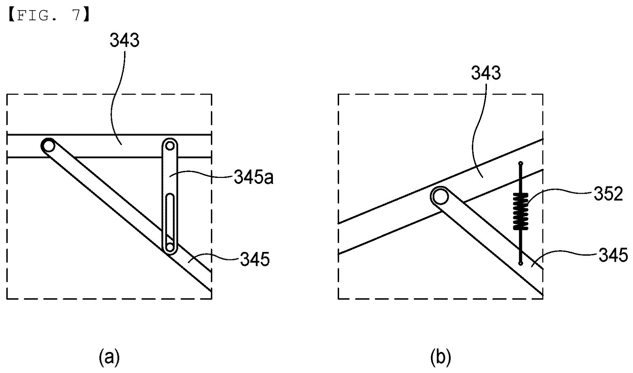

FIG. 3 is a side view illustrating a sensor of a stack cell taping apparatus according to an embodiment of the present invention, and FIG. 4 is a view of the stack cell taping apparatus according to the embodiment of the present invention, showing that a pair of rollers is located on a side surface of a stack cell. In addition, FIG. 5 is a view of the stack cell taping apparatus according to the embodiment of the present invention, showing that the pair of rollers is located parallel to an upper surface and a lower surface of the stack cell, FIG. 6 is a view of the stack cell taping apparatus according to the embodiment of the present invention, showing that the pair of rollers moves along the upper surface and the lower surface of the stack cell while pressing an adhesive member, and FIG. 7 is a view illustrating a connection member of the stack cell taping apparatus according to the embodiment of the present invention.

That is, FIG. 4 is a view illustrating the state in which a position adjustment guide of a stack cell taping apparatus according to an embodiment of the present invention is compressed, and FIG. 5 is a view illustrating the state in which the height of a guide portion is adjusted through the position adjustment guide shown in FIG. 4.

Referring to FIGs. 2 to 7, the stack cell taping apparatus according to the present invention includes a support 100, a sensor 200, and a taping unit 300.

The support 100 may be provided in plural so as to support a stack cell 10, and the supports may be disposed spaced apart from each other by a predetermined distance. At this time, the stack cell 10 may be transferred by an operator or a separate supply device.

For example, the predetermined distance may be the distance corresponding to the width of the taping unit 300 or the width of an adhesive member 20 such that the stack cell 10 is stably supported.

For example, the support 100 may be configured as a member having a flat upper surface and a flat lower surface such that the stack cell 10 is supported.

The sensor 200 may be provided in plural so as to measure the thickness t of the stack cell 10, and may be located above and under the stack cell 10 to measure the thickness t of the stack cell 10.

For example, the sensor 200 may be disposed between respective ones of the plurality of supports 100.

For example, a plurality of sensors 200 located above and under the stack cell 10 may be located on the same vertical line to measure the distance between an upper surface of the stack cell 10 and the sensors and the distance between a lower surface of the stack cell 10 and the sensors, thereby measuring the thickness t of the stack cell 10.

Here, the sensor 200 may be, but is not limited to, a laser sensor or a vision camera, and may be constituted by any sensor known to those skilled in the art.

In addition, for example, the sensor 200 may transmit the measured thickness t of the stack cell 10 to a controller (not shown).

The controller (not shown) performs overall control such that the functions of components are normally performed. The controller may be implemented in the form of hardware, may be implemented in the form of software, or may be in the form of a combination of hardware and software. The controller may be implemented in any of various forms known to those skilled in the art.

Meanwhile, the taping unit 300 may include a gripping portion 310, a roller portion 320, a guide portion 330, and a driving member 340. For example, the taping unit 300 may be configured to tape a side surface of the stack cell 10 supported by the plurality of supports 100.

First, the gripping portion 310 may be configured to grip both ends of the adhesive member 20 so as to tape the transferred stack cell 10 on the side surface of the stack cell 10. For example, the adhesive member 20 may be a tape.

The gripping portion 310 may include a first gripping unit 311 configured to grip one end of the adhesive member 20 and a second gripping unit 312 configured to grip the other end of the adhesive member 20.

For example, one end of the adhesive member 20 and the first gripping unit 311 may be located on the upper side (the 12 o'clock position in FIG. 4), and the other end of the adhesive member 20 and the second gripping unit 312 may be located on the lower side (the 6 o'clock position in FIG. 4).

Consequently, the first gripping unit 311 may be located on the upper side of the stack cell 10 to tape an upper surface of one side of the stack cell 10 through the adhesive member 20.

In addition, the second gripping unit 312 may be located on the lower side of the stack cell 10 to tape a lower surface of one side of the stack cell 10 through the adhesive member 20.

Here, each of the first gripping unit 311 and the second gripping unit 312 may be a vacuum suction plate, a description of the specific operating principle of which will be omitted since the vacuum suction plate is known to those skilled in the art.

The roller portion 320 may include a first roller 321 and a second roller 322.

The first roller 321 may be configured to move one end of the adhesive member 20 along the upper surface of one side of the stack cell 10. In other words, the first roller 321 may be rolled from one surface of the guide portion 330 and may be moved along the upper surface of one side of the stack cell 10.

For example, the first roller 321 may have a circular sectional shape so as to be rolled.

At this time, the first roller 321 may be located lower than the first gripping unit 311.

In addition, the first roller 321 may be moved from one surface of the guide portion 330 along the upper surface of one side of the stack cell 10 to push the adhesive member 20 gripped by the first gripping unit 311 such that the adhesive member 20 is attached to the upper surface of one side of the stack cell 10.

The second roller 322 may be configured to move the other end of the adhesive member 20 along the lower surface of one side of the stack cell 10. In other words, the second roller 322 may be rolled from the other surface of the guide portion 330 and may be moved along the lower surface of one side of the stack cell 10.

For example, the second roller 322 may have a circular sectional shape so as to be rolled.

At this time, the second roller 322 may be located higher than the second gripping unit 312.

In addition, the second roller 322 may be moved from the other surface of the guide portion 330 along the lower surface of one side of the stack cell 10 to push the adhesive member 20 gripped by the second gripping unit 312 such that the adhesive member 20 is attached to the lower surface of one side of the stack cell 10.

In other words, the roller portion 320 may move the gripping portion 310 to the stack cell 10 side, and therefore the adhesive member 20 gripped by the gripping portion 310 may be attached to the stack cell 10.

The gripping portion 310 and the roller portion 320 are moved to one side or the other by the driving member 340, and the driving member 340 will be described later.

Next, the guide portion 330 may include a guide unit 331 and a position adjustment guide 332 in order to guide a movement path of the roller portion 320 according to information on the thickness T of the stack cell 10. Here, the information on the thickness T of the stack cell 10 may be provided by the plurality of sensors 200. More specifically, the plurality of sensors 200 may measure the thickness t of the stack cell 10 and transmit the same to the controller (not shown), and the controller (not shown) may provide the information on the thickness T of the stack cell 10 to the guide portion 330 such that the guide portion 330 has the information on the thickness T of the stack cell 10.

The guide unit 331 may be located on the side surface of the stack cell 10. For example, the guide unit 331 may be located in tight contact with or adjacent to one side of the stack cell 10.

In addition, for example, the guide unit 331 may be set to have a thickness corresponding to the minimum thickness of the stack cell 10, or may be configured to have a thickness less than the minimum thickness of the stack cell 10.

The position adjustment guide 332 may be located on one surface and/or the other surface of the guide unit 331 to adjust the position of the roller portion 320.

For example, the position adjustment guide 332 may be located only on one surface of the guide unit 331 to adjust the height of the guide portion 330. In another example, the position adjustment guide 332 may be located only on the other surface of the guide unit 331 to adjust the height of the guide portion 330. In a further example, as shown in FIGs. 4 to 6, the position adjustment guide 332 may be located on one surface and the other surface of the guide unit 331 to adjust the height of the guide portion 330.

Hereinafter, the case in which the position adjustment guide 332 is located on one surface and the other surface of the guide unit 331 will be described by way of example.

The position adjustment guide 332 may adjust the height of the guide portion 330 so as to correspond to the thickness t of the stack cell 10 measured by the sensor 200.

For example, a part of the position adjustment guide 332 may be inserted into the guide unit 331 such that the height of the position adjustment guide can be adjusted by a servomotor provided in the guide unit 331.

For example, the height of the position adjustment guide 332 may be adjusted by a rack-and-pinion gear. In another example, the height of the position adjustment guide 332 may be adjusted by a cylinder.

Such height adjustment may be performed using height adjustment methods known to those skilled in the art, and therefore a more detailed description thereof will be omitted.

Meanwhile, although the position adjustment guide 332 may be located on one surface and the other surface of the guide unit 331 so as to be adjusted by an operator, it is preferable for the position adjustment guide to be adjusted bilaterally from the guide unit 331 by the controller (not shown) so as to correspond to the thickness t of the stack cell 10 measured by the sensor 200.

More specifically, if the guide unit 331 is 7 mm and the thickness t of the stack cell 10 is 11 mm, the height of the guide portion 330 may be adjusted so as to correspond to the thickness t of the stack cell 10 by raising the position adjustment guide 332 located on one side (upper side) by 2 mm and lowering the position adjustment guide 332 located on the other side (lower side) by 2 mm such that the height of the guide portion is 11 mm.

As a result, the height of the guide portion 330 may be adjusted by the position adjustment guide 332 to maintain a state parallel to the upper surface and the lower surface of the stack cell 10, and when the gripping portion 310 and the roller portion 320 are moved to the stack cell 10 side, the difference between the height of the guide portion 330 and the thickness of the stack cell 10 does not occur, thereby preventing defects of the stack cell 10.

Next, the driving member 340 may be configured to move the gripping portion 310 and the roller portion 320 to one side or the other side. For example, the driving member 340 may provide forward movement to move the gripping portion 310 and the roller portion 320 to the other side (the 3 o'clock position in FIG. 4) where the stack cell 10 is located and backward movement to move the gripping portion 310 and the roller portion 320 to one side (the 9 o'clock position in FIG. 4) so as to be spaced apart from the stack cell 10.

Specifically, the driving member 340 may include a cylinder 341, a support rod 342, a first driving rod 343, a second driving rod 344, a first roller rod 345, and a second roller rod 346.

First, the cylinder 341 may provide driving force to move the support rod 342, the first driving rod 343, the second driving rod 344, the first roller rod 345, and the second roller rod 346 to one side or the other side.

The support rod 342 may be provided on the other side of the cylinder 341. For example, the support rod 342 may be configured to connect the cylinder 341 to the first driving rod 343 and to connect the cylinder 341 to the second driving rod 344.

The first driving rod 343 may be connected to the support rod 342 on one side and to the first gripping unit 311 on the other side to provide driving force to the first gripping unit 311 such that the first gripping unit can be moved to one side or the other side.

For example, the first driving rod 343 may be connected to an upper side of the support rod 342.

In addition, for example, the first driving rod 343 may be connected to the rear of the first gripping unit 311 to provide driving force to the first gripping unit 311 such that the first gripping unit can be moved forward or backward, and therefore the adhesive member gripped by the first gripping unit 311 may be moved toward the upper surface of one side of the stack cell 10.

Here, that the first driving rod 343 provides driving force to the first gripping unit 311 may mean that the first driving rod 343 transmits driving force received through the cylinder 341 to the first gripping unit 311.

The second driving rod 344 may be connected to the support rod 342 on one side and to the second gripping unit 312 on the other side to provide driving force to the second gripping unit 312 such that the second gripping unit can be moved to one side or the other side.

For example, the second driving rod 344 may be connected to a lower side of the support rod 342.

In addition, for example, the second driving rod 344 may be connected to the rear of the second gripping unit 312 to provide driving force to the second gripping unit 312 such that the second gripping unit can be moved forward or backward, and therefore the adhesive member gripped by the second gripping unit 312 may be moved toward the lower surface of one side of the stack cell 10.

Here, that the second driving rod 344 provides driving force to the second gripping unit 312 may mean that the second driving rod 344 transmits driving force received through the cylinder 341 to the second gripping unit 312.

The first roller rod 345 may be connected to the first driving rod 343 on one side and to the first roller 321 on the other side to provide driving force to the first roller 321 such that the first roller can be moved to one side or the other side.

For example, the first roller rod 345 may be connected to the first driving rod 343 in a downwardly turned state.

In addition, for example, the first roller rod 345 may be turned inward relative to the first driving rod 343. For example, inward turning of the first roller rod 345 may be turning in a direction toward the guide portion 330.

In addition, a first connection member 345a may be interposed between the first roller rod 345 and the first driving rod 343. For example, the first connection member 345a may be a bracket member, which may have a long hole through which the bracket member is coupled to the first roller rod 345.

The first connection member 345a may be configured as a bracket member having a long hole, whereby the first roller rod 345 may be moved in the long hole when the first roller rod is turned in an inward direction.

Also, in another example, the first connection member 345a may be configured as an elastic unit. In this case, the elastic unit may be a tension spring. Consequently, the first connection member 345a may provide elastic force to the first roller rod 345 so as to prevent the first roller 321 from deviating from one surface of the guide portion 330 and the upper surface of one side of the stack cell 10 when the first roller is rolled from one surface of the guide portion 330 to the upper surface of one side of the stack cell 10 by the cylinder 341.

In addition, for example, the first roller rod 345 may be connected to the rear of the first roller 321 to provide driving force to the first roller 321 such that the first roller can be moved forward or backward, and therefore the first roller 321 may be rolled along the upper surface of one side of the stack cell 10.

At this time, air pressure may be applied to the first roller rod 345 through an air regulator (not shown) such that the first roller 321 can be rolled along the upper surface of one side of the stack cell 10.

In addition, that the first roller rod 345 provides driving force to the first roller 321 may mean that the first roller rod 345 provides driving force received through the cylinder 341 to the first roller 321.

The second roller rod 346 may be connected to the second driving rod 344 on one side and to the second roller 322 on the other side to provide driving force to the second roller 322 such that the second roller can be moved to one side or the other side.

For example, the second roller rod 346 may be connected to the second driving rod 344 in an upwardly turned state.

In addition, for example, the second roller rod 346 may be turned inward relative to the second driving rod 344. For example, inward turning of the second roller rod 346 may be turning in the direction toward the guide portion 330.

In addition, a second connection member 346a may be interposed between the second roller rod 346 and the second driving rod 344. For example, the second connection member 346a may be a bracket member, which may have a long hole through which the bracket member is coupled to the second roller rod 346.

The second connection member 346a may be configured as a bracket member having a long hole, whereby the second roller rod 346 may be moved in the long hole when the second roller rod is turned in the inward direction.

Also, in another example, the second connection member 346a may be configured as an elastic unit. In this case, the elastic unit may be a tension spring. Consequently, the second connection member 346a may provide elastic force to the first roller rod 345 so as to prevent the second roller 322 from deviating from the other surface of the guide portion 330 and the lower surface of one side of the stack cell 10 when the second roller is rolled from the other surface of the guide portion 330 to the lower surface of one side of the stack cell 10 by the cylinder 341.

In addition, for example, the second roller rod 346 may be connected to the rear of the second roller 322 to provide driving force to the second roller 322 such that the second roller can be moved forward or backward, and therefore the second roller 322 may be rolled along the lower surface of one side of the stack cell 10.

At this time, air pressure may be applied to the second roller rod 346 through the air regulator (not shown) such that the second roller 322 can be rolled along the lower surface of one side of the stack cell 10.

Here, that the second roller rod 346 provides driving force to the second roller 322 may mean that the second roller rod 346 provides driving force received through the cylinder 341 to the second roller 322.

The taping unit 300 having the above configuration is preferably disposed in plural so as to be located between the respective supports 100, and more preferably disposed in plural at opposite side surfaces of the stack cell 10.

For example, the taping unit 300 located on one side may attach the adhesive member 20 over the center of the stack cell 10 from one side, and the taping unit 300 located on the other side may attach the adhesive member 20 over the center of the stack cell 10 from the other side. Accordingly, the adhesive member 20 on one side and the adhesive member 20 on the other side may overlap each other on the center of the stack cell 10.

The stack cell taping apparatus according to the embodiment of the present invention may tape the plurality of adhesive members to opposite side surface of the stack cell 10, whereby stacked electrodes may be secured.

Hereinafter, a stack cell taping method using the stack cell taping apparatus according to the embodiment of the present invention will be described with reference to FIGs. 2 to 7.

The stack cell taping method according to the present invention includes (S1) disposing a stack cell 10 on the plurality of supports 100, (S2) measuring the thickness t of the stack cell 10 through the sensors 200, (S3) adjusting the height of the guide portion 330 through the position adjustment guide 332 so as to correspond to the measured thickness t of the stack cell 10, (S4) moving the gripping portion 310 and the roller portion 320 toward the stack cell 10 through the driving member 340, and (S5) attaching the adhesive member 20 gripped by the gripping portion 310 to a side surface of the stack cell 10.

For example, in step S2, the sensor 200 may measure the thickness t of the stack cell 10 and transmit the measured thickness t of the stack cell 10 to the controller (not shown).

Also, in step S3, the controller (not shown) may transmit a signal to the position adjustment guide 332 in order to adjust the height of the guide portion 330 so as to correspond to the measured thickness t of the stack cell 10.

Finally, in step S5, the adhesive member 20 may be attached to the side surface of the stack cell 10 as the gripping portion 310 is moved forward along with the roller portion 320 by the driving member 340.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Stack cell
20: Adhesive member
100: Support
200: Sensor
300: Taping unit
310: Gripping portion
311: First gripping unit 312: Second gripping unit
320: Roller portion
321: First roller 322: Second roller
330: Guide portion
331: Guide unit
332: Position adjustment guide
340: Driving member
341: Cylinder 342: Support rod
343: First driving rod 344: Second driving rod
345: First roller rod 345a: First connection member
346: Second roller rod 346a: Second connection member

## Claims

1. A stack cell taping apparatus comprising a taping unit, the taping unit comprising:
a gripping portion configured to grip both ends of an adhesive member so as to tape a transferred stack cell on a side surface of the transferred stack cell;
a roller portion configured to press the adhesive member against one surface and/or another surface of the transferred stack cell;
a guide portion configured to guide a movement path of the roller portion according to information on a thickness of the transferred stack cell; and
a driving member configured to move the gripping portion and the roller portion to one side or another side.

2. The stack cell taping apparatus according to claim 1, wherein the guide portion comprises:
a guide unit located on the side surface of the transferred stack cell; and
a position adjustment guide located on one surface and/or another surface of the guide unit, the position adjustment guide being configured to adjust a position of the roller portion.

3. The stack cell taping apparatus according to claim 2, further comprising a plurality of sensors configured to measure the thickness of the transferred stack cell and to provide information on the thickness of the transferred stack cell to the guide portion.

4. The stack cell taping apparatus according to claim 3, wherein the sensors are located on an upper side and a lower side of the transferred stack cell.

5. The stack cell taping apparatus according to claim 4, wherein the position adjustment guide is configured to adjust a height of the guide portion so as to correspond to the thickness of the transferred stack cell measured by the sensors.

6. The stack cell taping apparatus according to claim 1, further comprising a plurality of supports disposed spaced apart from each other by a predetermined distance, the supports being configured to support the transferred stack cell.

7. The stack cell taping apparatus according to claim 6, wherein the taping unit is disposed in plural so as to be located between respective supports.

8. The stack cell taping apparatus according to claim 7, wherein the gripping portion comprises:
a first gripping unit configured to grip one end of the adhesive member; and
a second gripping unit configured to grip another end of the adhesive member.

9. The stack cell taping apparatus according to claim 8, wherein each of the first gripping unit and the second gripping unit is a vacuum suction plate.

10. The stack cell taping apparatus according to claim 8, wherein the roller portion comprises:
a first roller configured to press one end of the adhesive member so as to be in tight contact along an upper surface of one side of the transferred stack cell; and
a second roller configured to press another end of the adhesive member so as to be in tight contact along a lower surface of the one side of the transferred stack cell.

11. The stack cell taping apparatus according to claim 10, wherein:
the first roller is configured to be rolled from one surface of the guide portion and is configured to be moved along the upper surface of the one side of the transferred stack cell; and
the second roller is configured to be rolled from another surface of the guide portion and is configured to be moved along the lower surface of the one side of the transferred stack cell.

12. The stack cell taping apparatus according to claim 10, wherein the driving member comprises:
a cylinder;
a support rod provided on the other side of the cylinder;
a first driving rod connected to the support rod on one side and to the first gripping unit on another side, the first driving rod being configured to provide driving force to the first gripping unit such that the first gripping unit can be moved to one side or another side; and
a second driving rod connected to the support rod on one side and to the second gripping unit on another side, the second driving rod being configured to provide driving force to the second gripping unit such that the second gripping unit can be moved to one side or another side.

13. The stack cell taping apparatus according to claim 11, wherein the driving member further comprises:
a first roller rod connected to the first driving rod on one side and to the first roller on another side, the first roller rod being configured to provide driving force to the first roller such that the first roller can be moved to one side or another side; and
a second roller rod connected to the second driving rod on one side and to the second roller on another side, the second roller rod being configured to provide driving force to the second roller such that the second roller can be moved to one side or another side.

14. The stack cell taping apparatus according to claim 1, wherein the taping unit is disposed in plural at opposite side surfaces of the transferred stack cell.

15. A stack cell taping method using the stack cell taping apparatus according to any one of claims 1 to 14, the stack cell taping method comprising:
(S1) disposing a stack cell on a plurality of supports;
(S2) measuring a thickness of the stack cell through sensors;
(S3) adjusting a height of the guide portion through a position adjustment guide so as to correspond to the measured thickness of the stack cell;
(S4) moving the gripping portion and the roller portion toward the stack cell through the driving member; and
(S5) attaching the adhesive member gripped by the gripping portion to a side surface of the stack cell.
